**Europäisches Patentamt**

**European Patent Office**

**Office européen des brevets**

(19)

(11) Publication number: **0 252 958**
**B1**

(12)

# EUROPEAN PATENT SPECIFICATION

(45) Date of publication of the patent specification:
06.12.89

(21) Application number: 87900681.5

(22) Date of filling: 16.01.87

(86) International application number:
PCT/HU 87/00003

(87) International publication number:
WO 87/04369 (30.07.87 Gazette 87/17)

(51) Int. Cl.⁴: **B 01 J 41/14,** B 01 J 39/20,
B 01 J 43/00, C 08 F 8/00 //
G01N30/48

| ERRATUM |

(SEITE, SPALTE, ZEILE)
(PAGE, COLUMN, LINE)
(PAGE, COLONNE, LIGNE)

DIE TEXTSTELLE :
TEXT PUBLISHED :
LE PASSAGE SUIVANT :

LAUTET BERICHTIGT:
SHOULD READ :
DEVRAIT ETRE LU :

| Text published | Page | Column | Line | Should read |
|---|---|---|---|---|
| impurities (US-A-366 113). | 2 | 1 | 46/47 | impurities (US-A-3 686 113). |
| aqueous medium at 79-80 °C, | 2 | 2 | 26 | aqueous medium at 78-80 °C, |
| the crude resin is resin after | 2 | 2 | 40 | the crude resin is after |
| due to the fast that while | 3 | 3 | 21 | due to the fact that while |
| to be minted are pumped | 3 | 4 | 22 | to be mixed are pumped |
| 3 times by socking | 3 | 4 | 60 | 3 times by soaking |
| pure hemicals are used | 4 | 5 | 54/55 | pure chemicals are used |
| at least 8 hours. | 4 | 5 | 65 | at least 48 hours. |
| solvents filled into. | 4 | 6 | 28/29 | solvents and filled into |
| "spring" of the resin matrix. | 4 | 6 | 38 | "springing" of the resin matrix. |
| pur des procédés connus. | 7 | | 20 | par des procédés connus. |

Tag der Entscheidung
über die Berichtigung )
Date of decision on ) 6.2.90
rectification: ) ..................
Date de décision portant )
sur modification: )

Ausgabe- und Ver-
öffentlichungstag: )
Issue and publication ) 4.4.90
date: ) ..................
Date d'edition et de )
publication: )

Patbl.Nr) 90/40
EPB no:) ........
Bull. no:)

# Europäisches Patentamt

(19) **European Patent Office**

**Office européen des brevets**

(11) Publication number: **0 252 958**

**B1**

(12)

# EUROPEAN PATENT SPECIFICATION

(45) Date of publication of the patent specification: **06.12.89**

(21) Application number: **87900681.5**

(22) Date of filling: **16.01.87**

(86) International application number: **PCT/HU 87/00003**

(87) International publication number: **WO 87/04369 (30.07.87 Gazette 87/17)**

(51) Int. Cl.⁴: **B 01 J 41/14, B 01 J 39/20, B 01 J 43/00, C 08 F 8/00 // G01N30/48**

(54) **PROCESS FOR THE PREPARATION OF EQUIGRANULAR ION EXCHANGE RESINS FOR ANALYTICAL AND PREPARATIVE PURPOSES.**

(30) Priority: **16.01.86 HU 22086**

(43) Date of publication of application:
**20.01.88 Bulletin 88/3**

(45) Publication of the grant of the patent:
**06.12.89 Bulletin 89/49**

(84) Designated Contracting States:
**DE FR IT**

(56) References cited:
**EP-A-0 058 358
EP-A-0 183 158
DD-A-229 992
US-A-2 689 832
US-A-4 101 460**

(73) Proprietor: **NITROKEMIA IPARTELEPEK, Pf. 45, H-8184 Füzfögyártelep (HU)**

(72) Inventor: **ERDELYI, Arpád, 8, Gagarin u., H-8184 Füzfögyártelep (HU)**
Inventor: **ARGYELAN, Jánosné, 1/A, Hunyadi u., H-8200 Veszprém (HU)**
Inventor: **KASSAI, László, 8/b; Gorkij fasor, H-1068 Budapest (HU)**
Inventor: **MADAI, József, 82, Fehérvári u., H-1119 Budapest (HU)**
Inventor: **OHMACHT, Róbert, 8, Sósfürdo " u., H-1115 Budapest (HU)**

(74) Representative: **Ahner, Francis, CABINET REGIMBEAU 26, avenue Kléber, F-75116 Paris (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

## Description

The present invention relates to the preparation of ion exchange resins of even grain size based on styrene-divinyl benzene copolymer matrix useful in analytical chemistry.

It is known that only ion exchange resins having even grain size, homogeneous inner structure and identical physical and chemical properties can be used for analytical purposes. Such resins can be prepared only by a non-conventional technique as the suitable purification and classification of the copolymer can not even be performed by expensive methods.

Ion exchange resins due to be utilized in modern analytics in a wide measuring range are to meet especially high requirements of quality. (Snyder-Kirkland, Introduction into the liquid chromatography, Muszaki Könyvkiadó 1979).

According to HU-A-176 374 polymerization in suspension is carried out in the presence of a special protective colloid consisting of a mixture of polyvinyl alcohol and polyacrylic acid ester for preparing ion exchange resins based on homodisperse vinyl-benzene-styrene pearl polymer. Thus homodisperse pearls of a grain size distribution of 12 to 14 microns may be prepared. This process, however, is not suitable for the preparation of homogeneous products having a grain size fluctuation within 1 micron or less.

It has been disclosed that cation exchange resins are subjected to acidic or alkaline treatment prior to use. Generally 6 N hydrochloric acid and then 2 N alkali are used according to the required ion form. This activation method mainly results in the purification of the surface of the resin particles but is not suited for the formation of the fine inner structure of the resin particles. Due to this circumstance the resin column can be used for measurings of suitable reproduction only after a relatively long time in measurements of particularly large sensitivity. This is due to the following reasons:

After the mentioned activation the resin grains still contain a large amount of sulfonated linear polymers which do not take part in the crosslinkage and other colloidal impurities (US-A-366 113). The various parameters used in the analysis (pH, temperature, ion concentration) start the eluation of the contaminating substances from the resin column. Thus the resin bed changes its volume and capacity. Another reason is that the eluating polymers result in a base perturbation at the test wave lengths, what can significantly disturb the evaluation.

The US-A-4 101 460 describes a composition of matter for exchanging ions comprising a

Component A, an insoluble substrate which consists essentially of synthetic resin, having ion exchanging sites at least on its available surface; and a
Component B, a finely divided, insoluble material comprising synthetic resin particles of from about 0,1 micron to about 5 microns median diameter having, at least on their outer surfaces, ion exchanging sites which attract available sites of Component A; wherein the particles of Component B are irreversibly attached as a monolayer to the available surface of Component A.

The present invention was aimed at the elaboration of a process for the preparation of homogeneous ion exchange resins of identical physical and chemical properties, of analytical purity, of spherical shape based on styrene-divinyl-benzene copolymer matrix by which the selectivity of analytical methods can be increased. The inner fine structure of the resin grains was formed to achieve maximal efficiency and in order to remove substances disturbing measurings. The column filled with the treated resin does not shrink, its capacity does, not change and no base perturbation occurs.

The process according to the present invention is characterized by the following operations:

a) a mixture of styrene and divinyl benzene is polymerized in the presence of peroxide; catalyst and protective colloid in ion-free aqueous medium at 79 – 80 °C, then at 95°C, the volatile impurities are removed by steam distillations the obtained copolymer is isolated and dried,

b) the spherical pearl polymer is sulfonated under mild conditions in a ten-fold excess related to the stochiometric amount, then the sulfuric acid medium is gradually eliminated by water under maintaining the ambient temperature,

c) the pearl polymer is chloromethylated with an excess of chloremomethylether in the presence of zinc chloride catalyst and ammonolysed at least twice,

d) the crude resin is resin after removal of the unreacted reactants suspended in an aqueous solution of the surfactants and then is centrifuged until the supernatant's turbidity is substantially ceased whereafter the aqueous medium in the pores of the resin is replaced by alcoholic medium and the resin is dried to constant weight,

e) the dried resin is subjected to air-shifting in ionized air of relative humidity of 20 – 40%,

f) the air-shifted product is franctionated by wet sedimentation in the aqueous solution of the surfactant and the sterilizing agent and the fraction within a grain size fluctuation of ± 0,5 micrometer is separated and dried after washing with alcohol,

g) the dried resin is treated in a mixture of ethanol, methyl-cellosolve and water at 50°C and then at 100°C with sodium hydroxide and then boiled with hydrochloric acid,

h) the fractionated resin is then suspended in sodium hydroxide solution and filled into a chromatographing column, the resin column is then treated with an aqueous solution containing organic solvent containing ions with increasing and then decreasing bond strength,

the resin is then removed from the column and subjected to acidic-alkaline treatment by method per se.

An essential feature of the known methods is that the pearl polymer is formed in the presence of additives in aqueous medium. The additives are partially solid substances and partially water soluble or emulsifiable high-molecular products. Their removal from the surface of the polymer after the polymerization is rather difficult due to the large surface of the polymer and thus the recovery of the pure product is rather difficult. According to the invention this problem was solved by using less additives for the preparation of the copolymer in the polymerization technique. In case of polymerization of completely ion-free medium a perfect spherical pearl polymer was obtained and the grain size of the pearls was also within narrower limits. The nearly similar grain size was partly due to the fast that while in case of introduction of ion-containing water a steady fluctuation can be observed.

When preparing cation exchange resin, the pearl polymer was treated with sulfuric acid moderately. The concentration of the sulfuric acid was chosen minimal and it was applied in a great excess. The heat released in the course of the reaction did not cause any significant local overheating, sulfonation took place unambigously and could be well reproduced as during sulfonation the concentration of the sulfuric acid was substantially constant.

After sulfonation the sulfonated pearl polymer was transferred from the sulfuric acid medium into the aqueous medium at constant weight and cautiously (the sulfuric acid concentration of the medium was first reduced by 3% per hour then after 10 hours by 5% per hour) so that the inner structure of the polymer was arranged upon the hydration energy without any tension.

When preparing an ion exchange resin chloromethylation was carried out with chloromethylether in an least tenfold excess relating to the stochiometric amount in order to incorporate the chloromethyl group nearly quantitatively. As catalyst zinc chloride was used so the additional cross linking could be avoided. Ammonolysis was twice repeated by introducing fresh ammonolysing reactant, so that the chloromethyl group is converted to an active group without residue. Carrying out the chemical reactions under optimal conditions resulted in an homogeneous distribution of the active groups inside the individual polymer grains.

The ion exchange resins are then decomposed to fractions of suitable grain size. For this purpose the ion exchange resin is distributed to fractions by using counter surrent sorting separator by air. The width of the obtained fraction can be controlled, the minimal attainable width is ± 20 %. In the course of the air-shifting the aggregation of the particles should be avoided as well as the change of their physical properties (such as density, mass). During wet separation determined eduction times and settling liquid-mixtures and chemicals of high purity are used. It is of particular importance that the fractions of differet grain size are separated under unchanged conditions of sedimentation (by convection or by other method), so that no turbulence occurs. Sedimentation time and concentrations are not determined on the basis of the Stokes-law, but by means of monograms obtained by practical measurings. The thus obtained product can be homogenized as required according to quality particle size.

The details of the invention can be found in the following non-limiting Examples.

## Example 1

### Preparation of Pearl Polymers

Into an apparatus equipped with a 4 liter cooler, thermometer and mixer (in the mixer the substances to be minted are pumped between a rotating and a standing gapped cyclinder, rotation number 5600 rot/min.) 1000 $cm^3$ of ion-free water are fed. 15 g of polyvinyl alcohol are soaked in the water for 16 – 20 hours, the mixture is the then supplemented to 3000 $cm^3$ and heated to 100°C and kept at this temperature for 10 minutes while the mixer is working at low rotation number (2000 rot/min.). The mixture is cooled to 75°C, the required rotation number is adjusted and the prepared monomer mixture of 184 g of styrene, 16 g of divinyl benzene and 0.18 g benzoyl peroxide is fed into the apparatus. The mixture is kept at 30°C for 4 hours, heated to 95 – 98°C and stirred for further 4 hours, heated to centrifuge the ready polymer is separated, suspended in 1000 $cm^3$ of washwater, centrifuged again and then it is heated to boiling with a new wash water and purified by steam distillation. It is again centrifuged product is dried. The distribution of the grains of the obtained product is rather even ( 36 % ) and falls within the range of ± 1 micrometer.

### Preparation of Cation Exchange Resin

To a 2 liter sulfonating flask 600 ml of 90 % sulfuric acid and previously 100 g of pearl polymer are added. The mixture is stirred for 4 hours at room temperature and it is heated to 95°C. A postsulfonation is carried out for 3 hours at this temperature. Dilution is performed with max. 0.2 $Scm^{-1}$ ion-free water, at the beginning by reducing the sulfuric acid concentration of the medium by 3 % per hour and after 10 hour 5 % per hour to 1 % acid content. The product is separated from the mother liquor on a centrifuge whereafter it is taken up in 1000 $cm^3$ water and centrifuged again. Washing is repeated 3 times by socking for 16 hours each.

## Preparation or Anion Exchanged Resin

To a 2 liter flask 1200 cm$^3$ of chloromethylether are added. 100 g of pearl polymer are added under stirring and the mixture is stirred at 25°C for 3 hours and it is maintained at the boiling temperature for 10 hours after the addition of 60 g of ZnCl$_2$. The excess chloromethylether is decomposed with methanol and the mixture is washed with water by means of a centrifuge. After washing to neutral it is ammonolysed with a mixture of 100 cm$^3$ of 40 % triethyl amine and 60 % of water at 35°C for 10 hours. The residual ammonolysing mixture is removed by filtration and a further ammonolysis takes place with a mixture of 100 ml. of 40 % triethylamine and 60 % of water at 35°C. After 10 hours of ammonolysis the mixture is filtered and washed several times with 1000 cm$^3$ of water by means of a centrifuge.

## Example 2

The process is carried out as given in Example 1 but when preparing the pearl polymer the rotation number is adjusted to 4200. Grain size distribution of the product: 32 % 9 ± 1 micrometers.

## Example 3

For the preparation of highly efficient amino acid analysator resin of grain size 9 ± 0.5 µm the raw material of Example 1 is purified. From the raw resin a 20 % by mass suspension is prepared with distilled water containing Na-lauryl sulfate. The suspension is homogenized for 0.5 hour by means of ultrasound. The suspension is centrifuged for 30 minutes at 6 ± 3°C at 350 – 400 g and the supernatant is covered with liquid. The previous steps are repated at least twice and the supernatant is measured turbidimetrically, the difference between the turbidimetric values of the last and the last but one supernatant will be below 0.04 absorption unit. (Lambert-Beer). From the centrifuged settled layer a 20 % by mass suspension is prepared with a mixture of 50 methanol-water and homogenized with ultrasound and centrifuged as given above. The settled layer is dried in large open glass vessels at 40°C at a pressure of 0.1 bar to constant weight. The obtained resin is air-shifted under a relative humidity of 20 - 40 %. The chosen fraction is subjected to wet separation. Particularly pure hemicals are used for the separation. As suspension medium distilled water containing 0.1 per thousand by mass of Na-lauryl sulfate, 0.5 per thousand by mass of a hypochlorite and 1 per thousand by mass of isopropyl alcohol of conductivity of originally max. 5 is used. Sedimentation is performed in a gradually sterilized place. For the removal of grains of a size less than 3 micron a 5 % by mass suspension is prepared, homogenized and settled in a glass vessel, of height 45 – 50 cm. The time of sedimentation is at least 8 hours. The sedimentation is repeated at least twice. The obtained settled layer is worked up for analytical sedimentation purposes, a 3 % by mass suspension is prepared and homogenized with the previously obtained suspension medium. The sedimentation is conducted for two different time intervals (lowpass, high pass).

In order to determine the dwelling time a grain size analysis is carried out from 2 – 3 cm$^3$ suspension sample taken from the liquid column at its 1/4 and 1/2 height. The sedimentation is repeated 16 – 90 times. Sedimentation fractionation is completed when during the law pass the turbidimetric value of the sample taken at the 5/8 height of the liquid column and during the high pass at the height of 1/4 height of the liquid column does not exceed the absorption unit of 0.01. The ready fraction is filtered through G4 filter. It is washed three times with distilled water, once with a 50 % mixture of methanol and water, and once with methanol and filtered. The washed resin is dried in an open glass vessel at 0.1 bar at 40°C to constant weight.

## Example 4

The resin is thoroughly washed with organic solvents filled into a chromatographic column.

Through the column solutions with various counter ions are passed by a feeding pump. The counter ions are selected on the basis of the Hofmeister liotropic series while it is advantageous to choose ions of similar bond strength for the sake of replaceability in both directions. The various ion diametres, bond strength of these ions and the dynamic loading caused by the flow results in a "spring" of the resin matrix. Due to the "springing" the linear polymers and the colloidal impurities can be removed from the resin matrix. Washing can be performed with an organic solvent added to the solutions. The resin column is first washed with a solution-series containing ions with increasing bond strength and then with the same solutions at the order of decreasing bond strength. The resin is taken out of the column and the conventional acidic and alkaline treatment is performed. The end product is in Na$^+$ form.

For the activation of the cation exchange of grain size of 9 microns used in the amino acid analysator 50 g of dry resin are treated for 30 minutes in a 1000 cm$^3$ Erlenmayer flask with a mixture of 500 cm$^3$ ethanol-methyl cellosolve - 0.8 N NaOH / 40 : 40 : 20 / in a 50°C ultrasound bath. The suspension is then filtered through Whatman N° 4 filter by means of a Buchner funnel and rinsed with 2 x 100 cm$^3$ of the above mixture. The retention on the filter is washed with 3 x 150 cm$^3$ of a 0.2 N NaOH solution. The ion exchange resin remaining on the filter in the form of wet sludge is quantitatively washed into a beaker by means of 0.2 N NaOH solution. The thus obtained suspension is treated on an ultrasound bath at room temperature for 5 minutes. The resin in the Na$^+$ form is filled with a feeding pump at a flow rate of

20 cm$^3$/h into a chromatographic column by using 0.2 N sodium hydroxide.

The following solutions containing the following counter ions are passed, through the filled columns:

1.  1.5 N LiOH / propanol / 70 : 30 /
2.  1.5 N NaOH / propanol / 70 : 30 /
3.  1.5 N NH$_4$OH / propanol / 70 : 30 /
4.  1.5 N KOH / propanol / 70 : 30 /

A tenfold volume of the resin bed of the solutions is passed through the filled column first on the basis of increasing then decreasing serial number., and finally 0.001 N HCl is passed through the column.

The resin is then taken out of the column and boiled under steady stirring on a hot water bath in a tenfold amount of 6 N HCl for 45 minutes. In order to remove the heavy metal ions 0.1 % of ethylene diamine tetra-acetic acid is added to the mixture. The resin is filtered after the treatment and HCl is removed by a thorough washing with ion-free water. The resin is then boiled for 45 minutes on a hot water bath with 0.8 N NaOH added in a tenfold excess. The resin is then filtered and washed thoroughly with ion-free water. Until he filling of the column the resin is stored in 0.2 N NaOH in an amount corresponding to the mass of the resin.

Properties of the cation exchange resin prepared according to Examples 1 to 3, activated as given in Example 4 and having a grain size of 9 micron:

    column size: Ø 4,5 mm l = 230 mm
    flow rate of the eluant: 20 cm$^3$/h
    flow rate of the reactant: 10 cm$^3$/h
    column temperatures: 40°C
                         60°C
                         80°C
    eluant system: Pico-Buffer II
    dwelling time in the reactor: 6 minutes
    optical route length of the cuvette: 2 mm
    tested substance: hydrolysate standard, as 1 mole/ml amino acid.

1)  The highest pressure gradient on the column cannot exceed 45 bar.
2)  Dwelling time of the last peak (arginin) cannot exceed 4800 sec.
3)  The resolution of the overlapping peak pairs within the analysis time given under 2, should be at least of 88 % on the basis of the following calculation:

$$\text{Resolution} = \frac{\text{peak height - valley}}{\text{peak height}} \times 100\,\%$$

4)  The change of the base during analysis and the standard deviation of the dwelling times between analysis cannot exceed the value derived from the technical parameters used for the measurings.

## Claims

1.  Process, for the preparation of ion exchange resins of even grain size for analytical and preparative purposes which comprises:

    a)  polymerizing a mixture of styrene and divinyl benzene, in the presence of peroxide catalyst and protective colloid in ion-free aqueous medium at 78 - 80°C then at 95°C, removing the volatile impurities by steam distillation, isolating the obtained copolymer and drying same,
    b)  sulfonating the spherical pearl polymer in an at least tenfold excess related to the stochiometric amount under moderate conditions and gradually eliminating the sulfuric acid medium with water while maintaining ambient temperature,
    c)  chloromethylating the pearl polymer in the presence of zinc chloride catalyst with an excess of chloromethyl ether and ammonolysing at least twice,
    d)  suspending — after removing the unreacted reactants - the raw resin in an aqueous solution of surfactants and centrifuging until the turbidity of the supernatant and replacing the aqueous medium in the pores of the resin by alcoholic medium and drying the resin to constant weight,
    e)  subjecting the dried resin to air shifting in an ionized airspace of a relative humidity of 20 – 40%,
    f)  fractionating the air-shifted product by wet sedimentation in an aqueous solution of a surfactant and sterilizing agent and separating the product within a grain size fluctuation of ± 0.5 micrometer and drying after washing with alcohol,
    g)  treating the dried resin in a mixture of ethanol, methyl-cellosolve and later at 50°C and then at 100°C with sodium hydroxide and finally boiling it with hydrochlorid acid,
    h)  suspending the fractionated resin in sodium hydroxide solution and filling it into a chromatographic column, treating the resin column with an aqueous-organic solution-series containing ions of increasing bond strength and then of decreasing bond strength and then recovering the resin from the column and subjecting it to acidic-alkaline treatment by methods known per se.

2.  Process as claimed in claim 1 which comprises circulating the mixture of styrene and divinyl benzene in the presence of less than 0.5 % by mass of polyhydroxide through a stirrer apparatus by emulsifying the two layers in each other.

3.  Process as claimed in claim 1, which comprises using ion-free water of electrical conductivity less than 0.2 S/cm as polymerization medium.

4.  Process as claimed in claim 1, which comprises using sodium lauryl sulfate as a surfactant.

5. Process as claimed in claim 1, which comprises using methyl alcohol as alcoholic medium.

6. Process as claimed in claim 1, which comprises using as ion containing solution-series of increasing or decreasing bond strength solutions of LiOH, NaOH, NH₄OH and KOH.

**Patentansprüche**

1. Verfahren zur Herstellung von Ionenaustausch-Harzen gleichmäßiger Korngröße für analytische und präparative Zwecke, bestehend aus den Verfahrensschritten:

a) Polymerisieren einer Mischung von Styrol und Divinylbenzol bei Anwesenheit eines peroxidischen Katalysators und eines Schutzkolloids in ionenfreiem wäßrigem Medium bei 78° − 80°C, dann 95°C, Entfernen der leichtflüchtigen Verunreinigungen durch Dampfdestillation, Abtrennen und Trocknen des erhaltenen Kopolymers,

b) Sulfonierung der kugelförmigen Polymerkörner unter Moderaten Bedingungen und in gegenüber dem stöchiometrischen Wert mindestens zehnfachem Überschuß und schrittweise Entfernung des schwefelsauren Mediums mit Wasser unter Beibehaltung der Umgebungstemperatur,

c) Chlormethylierung der Polymerkörner bei Anwesen heit von Zinkchlorid als Katalysator in einem Überschuß von Chlormethyläther und mindestens zweimalige Ammonolysierung,

d) Herstellen einer Suspension des Rohharzes - nach Entfernen der unverbrauchten Reaktanden − in einer wäßrigen Lösung von Tensiden, Zentrifugieren bis die Trübung des Überstands verschwindet, Austausch des wäßrigen Mediums in den Poren des Harzes gegen ein alkoholisches Medium und Trocknen des Harzes bis zum Ausgangsgewicht,

e) Durchführen einer Luftsichtung des getrockneten Harzes in einem ionisierten Luftraum mit einer relativen Luftfeuchtigkeit von 20 − 40%,

f) Fraktionierung des luftgesichteten Produkts durch nasse Sedimentation in wäßriger Lösung eines Tensids und eines sterilisierenden Agens, Abtrennen des Produkts mit einer Korngrößen schwankung von ± 0,5 Mikrometer, Waschen mit Alkohol und Trocknen,

g) Behandlung des getrockneten Harzes mit einer Mischung von Äthanol, Methyl-Äthylglykol und Wasser bei 50°C, anschließend Behandlung mit Natriumhydroxid bei 100°C und schließlich Kochen in Salzsäure,

h) Aufschwemmen des fraktionierten Harzes in einer Natriumhydroxid-Lösung, Einfüllen in eine Chromatographiesäule, Behandlung der Harzsäule mit einer Reihe wäßriger, organischer Lösungen, die zunächst Ionen mit wachsender und dann solche mit geringer werdender Bindungsstärke enthalten, Entnehmen des Harzes aus der Säule, um es daraufhin in an sich bekannter Weise einer sauer-alkalischen Behandlung zu unterziehen.

2. Verfahren nach Anspruch 1, dadurch gekennzeichnet, daß die Mischung aus Styrol und Divinylbenzol in Anwesenheit von weniger als 0,5 Gewichtsprozenten des Polyhydroxids mit einem Rührwerk aufgerüht wird, so daß die beiden Schichten ineinander emulgieren.

3. Verfahren nach Anspruch 1 dadurch gekennzeichnet, daß als Polymerisationsmedium ionenfreies Wasser mit einer elektrischen Leitfähigkeit von weniger als 0,2 S/cm verwendet wird.

4. Verfahren nach Anspruch 1, dadurch gekennzeichnet, daß als Tensid Natriumlaurylsulfat verwendet wird.

5. Verfahren nach Anspruch 1 dadurch gekennzeichnet, daß als alkoholisches Medium Methyl-Alkohol verwendet wird.

6. Verfahren nach Anspruch 1, dadurch gekennzeichnet, daß als ionenhaltige Lösungsreihen mit wachsender oder geringer werdender Bindungsstärke Lösungen von LiOH, NaOH, NH₄OH und KOH verwendet werden.

**Revendications**

1. Procédé de préparation de résines échangeuses d'ions équigranulaires à des fins d'analyses et de préparation dans lequel:

a) on polymérise un mélange de styrène et de divinylbenzène en présence d'un catalyseur peroxyde et d'un colloïde protecteur en milieu aqueux désionisé à 78 - 80°C puis à 95°C, on retire les impuretés volatiles par distillation à la vapeur, on isole le copolymère obtenu et on le sèche,

b) on sulfone le polymère perle sphérique en un excès d'au moins dix fois la quantité stoechiométrique dans des conditions modérées et on élimine graduellement le milieu acide sulfurique avec de l'eau tout en maintenant la température ambiante,

c) on chlorométhyle le polymère perle en présence d'un catalyseur de chlorure de zinc avec un excès de chloro méthyl-éther et on ammonolyse au moins deux fois,

d) on met en suspension après avoir enlevé les réactifs n'ayant pas réagi - la résine brute dans une solution aqueuse d'agents tensioactifs et on centrifuge jusqu'à ce que le trouble du surnageant cesse et on remplace le milieu aqueux dans les pores de la résine par un milieu alcoolique et on sèche la résine à poids constant,

e) on soumet la résine séchée à un déplacement d'air dans une atmosphère ionisée d'une humidité relative de 20 - 40 %,

f) on fractionne le produit ayant subi le déplacement d'air par sédimentation humide dans une solution aqueuse d'un agent tensio-actif et d'un agent stérilisant et on sépare le produit dans une fluctuation de granulométrie de ± 0,5 micromètre, et on sèche après lavage à l'alcool,

g) on traite la résine séchée dans un mélange d'éthanol, de méthyl-cellosolve et d'eau 50°C puis à 100°C avec de l'hydroxyde de sodium et enfin on la fait bouillir avec de l'acide chlorhydrique,

h) on met en suspension la résine fractionnée dans une solution d'hydroxyde de sodium et on la verse dans une colonne chromatographique, en traitant la colonne de résine avec une série de solutions organiques aqueuses contenant des ions de force de liaison croissante puis de force de liaison décroissante puis en recueillant la résine de la colonne et en la soumettant à un traitement acide-alcalin pur des procédés connus.

2. Procédé selon la revendication 1 dans lequel on fait circuler le mélange de styrène et de divinyl-benzène en présence de moins de 0,5 % en masse de polyhydroxyde à travers un appareil d'agitation en émulsifiant les deux couches l'une dans l'autre.

3. Procédé selon la revendication 1 dans lequel on utilise de l'eau désionisée de conductivité électrique inférieure à 0,2 S/cm comme milieu de polymérisation.

4. Procédé selon la revendication 1 dans lequel on utilise du lauryl-sulfate de sodium comme agent tensio-actif.

5. Procédé selon la revendication 1, dans lequel on utilise de l'alcool méthylique comme milieu alcoolique.

6. Procédé selon la revendication 1, dans lequel on utilise comme série de solutions contenant des ions de force de liaison croissante ou décroissante des solutions de LiOH, NaOH, $NH_4$ OH et KOH.